# EUROPEAN PATENT APPLICATION

(11) **EP 1 286 496 A2**
(43) Date of publication of application: **26.02.2003**
(21) Application number: 01309669.8
(22) Date of filing: 16.11.2001
(51) Int. Cl.: H04L 12/24

(54) **Method and device for network management**

(30) Priority: 23.08.2001 JP 2001253458
(71) Applicant: Allied Telesis K. K., Shinagawa-ku, Tokyo 141-8635 (JP)
(72) Inventor: Sato, Kazuhiko, c/o Allied Telesis Kabushiki K., Tokyo 141-8635 (JP)
(74) Representative: Faulkner, Thomas John

(57) **Abstract**

There is provided a management system including a managed device 50 connected to a network and assigned network information that enables communications of the managed device 50 on the network, a management device 10, connected to the network, which manages the managed device 50 based on the network information and stores the network information in an information recordable medium, and a drive unit which reads the information recordable medium, wherein the managed device 10 is made available when the drive unit reads the network information of the managed device from the information recordable medium.

## Description

The present invention relates generally to management systems that manage a computer network. The present invention is suitable, for example, for apartment houses and office buildings equipped with a computer network, such as a LAN (Local Area Network), so as to enhance the security of each terminal as well as the security of the entire network.

Along with the recent spread of LANs and WANs (Wide Area Networks), a large number of network devices, such as personal computers ("PCs" hereinafter), hubs, switches, and routers (hubs etc. are often called "agents") have been connected to a network and its subnet(s) for frequent information sharing and communications. It is conceivable to adopt the distributed managements for network's structure, performance, security, and billing, but such managements make it difficult and expensive to locate and deal with any fault in the network and are not suitable for risk management. Therefore, the centralized management of network statuses has been demanded.

In order to realize a centralized management of the network, a management device (also called "manager" or "server") monitors connection statuses and traffics of agents, after managed devices are connected to the network and their communication parameters are set up. The communication parameters include an IP address to enable the network devices to communicate with each other in the network and the manager to manage these network devices.

However, an independent management of a specific network device has been difficult in a network environment that is built with plural network devices. For example, in companies or other organizations, which build a network with plural network devices to enable them to share printers, files, etc., some network devices for certain ranks, such as executives and administrators, often store confidential information even in the same company, such as company's trade secrets, employees' payment information, and employees' merit rating information, e.g., working hours and business result. Thus, an indiscretion problem may occur when these network devices get connected to the network.

These network devices might be protected, for example, when disconnected from the network for isolated use. Instead, this protection disadvantageously sacrifices a benefit to share printers and files, and makes users feel inconvenience. A special protection should be provided for these network devices in the network when they are connected to the network. Of course, if these network devices are made easily accessible to an unauthorized person, even the isolated use of them is insufficient to prevent the indiscretion. One typical way of eliminating unauthorized accesses would be an authentication of a user ID and password for such a device, but unauthorized persons relatively easily acquire that information since a user problematically assigns his/her unforgettable name, birthday, telephone number etc. to the user ID and password.

Moreover, where companies maintain securities for office environment against intruders by relying upon a security company and/or by locking certain room(s), distributed managements of the network and office environment would not be suitable for the risk management.

Accordingly, it is an exemplified object of the present invention to provide a management system and method that may allow a specific user to use a network device connected to a network.

In order to achieve the above objects, a management system as one aspect of the present invention comprises a managed device connected to a network and assigned network information that enables communications of the managed device in the network, a management device, connected to the network, which manages the managed device based on the network information and stores the network information in an information recordable medium, and a drive unit which reads the information recordable medium, wherein the managed device is made available when the drive unit reads the network information of the managed device from the information recordable medium. The management system makes available the managed device when the drive unit reads the information recordable medium that stores the network information corresponding to the managed device. Therefore, this system does not allow a third party who has no information recordable medium to use the managed device, preventing the leakage of information through the managed device.

The information recordable medium is, for example, an IC card. The drive unit may include a storage part for storing the network information of the managed device, and a controller that stores in the storage part the network information read from the information recordable medium when determining that the network information is not stored in the storage part. This management system may store the network information in the storage part in the drive unit during the initial operation of the system. The drive unit may include a storage part for storing the network information of the managed device, and a controller which compares data read from the information recordable medium, with the network information stored in the storage part, and makes available the managed device when determining that the data read from the information recordable medium corresponds to the network information stored in the storage part. According to this management system, the managed device is made available when the data read from the information recordable medium corresponds to (e.g., accords to or is included in) the network information stored in the storage part. Thus, the present invention does not require data stored in the information recordable medium to completely accord with the network information stored in the storage part, and the data may be accord with part of the network information stored in the storage part.

The drive unit may communicate with the management device, and wherein the management device may include a storage part for storing the network information of the managed device, and a controller which compares data sent from the drive unit with the network information stored in the storage part, and makes available the managed device when determining that the data corresponds to the network information stored in the storage part. According to this management system, the drive unit communicates with the management device and the management device controls the availability of the managed device. The present invention may enable the management device to receive data read by the drive unit, and to determine whether the read data corresponds to the network information stored in the storage part, so as to control the availability of the managed device.

The management system may further comprise an interconnecting device which connects the network to the managed and management devices, wherein the management device sets up the interconnecting device so as to assign a VLAN to the managed device based on the network information of the managed device. According to this management system, the management device sets up the interconnecting device and logically divides the network based on the network information of the managed device, forming a plurality of groups which are not communicate with each other even in the same network. Thereby, the management device may maintain the security for each VLAN group in the network. The network information may include the VLAN (*i.e*., an identifier of VLAN).

Such an interconnecting device may execute a predetermined operation when the drive unit reads predetermined data from the information recordable medium. The predetermined operation may include, for example, a collection of predetermined information and a restriction of an access to the network. This trigger function of the interconnecting device is preferable to achieve the automatic process.

The management system may further comprise an admittance manager, connected to the management device, which controls admittance into an area in which the network is built, by reading the information recordable medium and communicating with the management device. This system may combine the entrance management to the area with the management by the management device, achieving a unitary management. The network may include a plurality of VLANs, and one of the VLANs may be assigned to the area. Thereby, the management device may maintain the security for each VLAN group in the network.

The network information may include a communication parameter necessary for communications by the managed device in the network, *e.g*., an IP address, a subnet mask, a default gateway, a user ID and password, and a combination thereof, and device information that defines the managed device, *e.g*., a MAC address and a housing identifier.

A management system of another aspect of the present invention comprises a managed device connected to a network and assigned network information that enables communications of the managed device on the network, and a management device, connected to the network, which manages the managed device based on the network information, and wherein the management device includes a first drive unit for storing the network information into an information recordable medium, wherein the managed device includes a second drive unit that reads the network information from the information recordable medium, and wherein the managed device stores the network information read by the second drive unit, and is made available when the network information read by the second drive unit corresponds to the network information stored. This management system makes available the managed device when the second drive unit reads the network information from the information recordable medium. Therefore, this management system does not allow a third party who has no information recordable medium to use the managed device, preventing the leakage of information through the managed device.

According to another aspect of the present invention, there is provided a management method of an access to a network by a managed device that is connected to the network and assigned network information that enables communications of the managed device in the network, the method comprising the steps of reading an information recordable medium, storing the network information in a storage part, determining whether data read from the information recordable medium corresponds to the network information stored in the storage part, and making available the managed device in the network, when the determining step determines that the data read from the information recordable medium corresponds to the network information stored in the storage part. This management system makes available the managed device, when the data read from the information recordable medium corresponds to the network information stored in the storage part. Therefore, this system does not allow a third party who has no information recordable medium to use the managed device, preventing the leakage of information through the managed device.

This method may further comprise a step of setting up the network information in the managed device read from the information recordable medium. Thereby, this method enables to manage both a set up and availability of the managed device for a unitary management.

A network device according to still another aspect of the present invention which is connected to a network and assigned network information that enables communications of the network device in the network includes a drive unit which comprises a reader part for reading an information recordable medium, a storage part that stores the network information, and a controller that makes the network device available when determining that data read by the reader part from the information recordable medium corresponds to the network information stored in the storage part. This network device may restrict its availability since it is available when the network information stored in the storage part is read from the information recordable medium. Thus, this network device prevents the unauthorized use of the network and enhances the security of the network. The controller may set up the network information read by the reader part from the information recordable medium, when determining that the network information has not yet been stored in the storage part. This initial operation may store the network information in the storage part and makes it usable for authentication. The drive unit controls power to be supplied to the network device, and the controller makes the network device available by allowing the power supply to the network device. According to such a network device, drive unit's controller controls the power supply to the network device, restricting the availability of the network device.

A management device according to still another aspect of the present invention, which is connected to a network, and manages a managed device connected to the network and assigned network information that enables communications of the management device on the network comprises a storage part which stores the network information, a drive unit which stores the network information into an information recordable medium to be used to set up in the managed device, and a controller which controls an availability of the network device. This management device may store the network information in the information recordable medium, and manages both an operation and availability of the managed device, achieving a unitary management.

According to another aspect of the present invention, there is provided a program for computer-executing a method of making available a managed device that is connected to a network and assigned network information that enables communications of the managed device on the network, the network information being stored in an information recordable medium and a storage part, the method comprising the steps of determining whether data read from the information recordable medium corresponds to the network information that has been stored in a storage part, and making available the managed device in the network, when the determining step determines that the data read from the information recordable medium corresponds to the network information stored in the storage part. This program also achieves the aforementioned operations.

Other objects and further features of the present invention will become readily apparent from the following description of preferred embodiments with reference to accompanying drawings.
FIG. 1 is a structural view of a management system of the present invention.
FIG. 2 is a structural view of a network built in the management system shown in FIG. 1.
FIG. 3 is a schematic block diagram of a management device.
FIG. 4 is a view showing an example of management table.
FIG. 5 is a schematic block diagram of an entrance server.
FIG. 6 is a schematic block diagram of an interconnecting device.
FIG. 7 is a schematic block diagram of a network device.
FIG. 8 is a schematic block diagram of an admittance manager.
FIG. 9 is a flowchart for explaining an initial operation of the management system.
FIG. 10 is a flowchart of a management-table creating program.
FIG. 11 is a timing chart for explaining an operation of the management system.
FIG. 12 is a flowchart showing a control operation of an IC card drive.
FIG. 13 is a flowchart showing a control method by the admittance manager.
FIG. 14 is a flowchart showing a control method by a management device.

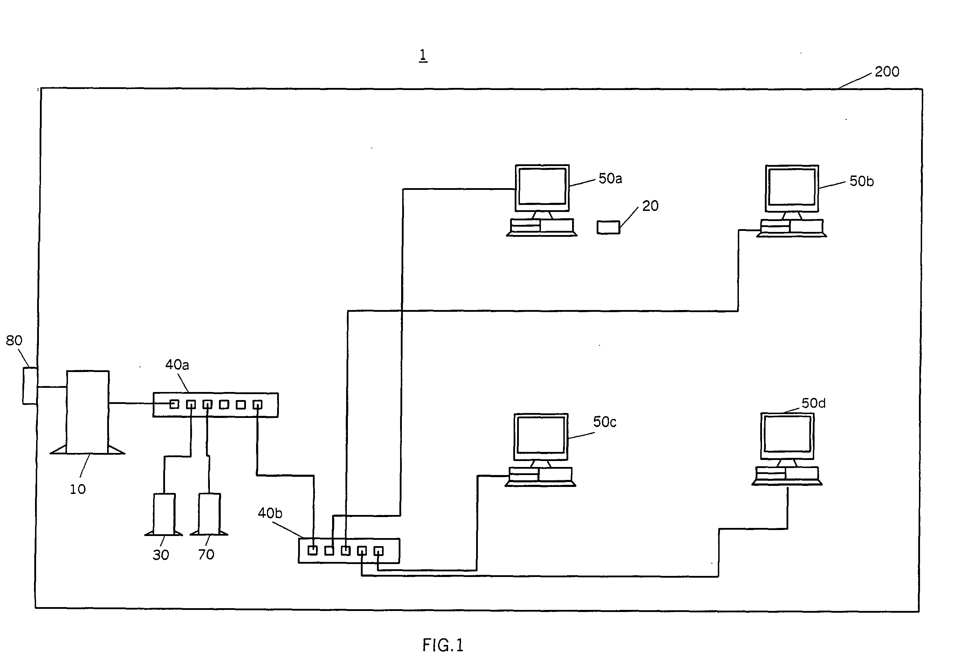

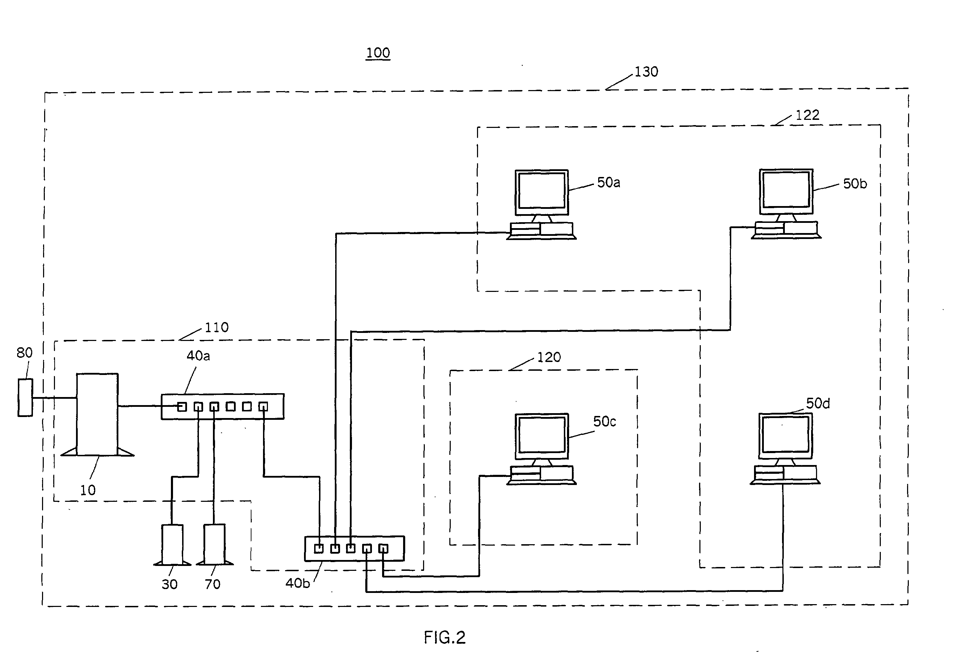

A description will now be given of a management system 1 of the present invention with reference to the accompanied drawings. Here, FIG. 1 is a structural illustration of the management system 1 of the present invention. FIG. 2 is a structural illustration of the network 100 built in the management system 1. The inventive management system 1 includes a management device 10, an entrance server 30, interconnecting devices 40, network devices 50, a common server 70, and an admittance manager 80. In this disclosure, the interconnecting devices 40 and network devices 50 respectively generalize interconnecting devices 40a and 40b and network devices 50a-50d, unless otherwise specified.

The management system 1 is applied to an office 200 in a company etc. The network 100 built in the office 200 includes the interconnecting devices 40 to which a plurality of network devices 50 are connected. The network devices 50a-50d are connected the interconnecting device 40b, while the interconnecting device 40b is connected to the interconnecting device 40a. The management device 10, entrance server 30, and common server 70 are connected to the interconnecting device 40a. The admittance manager 80 is connected to the management device 10 and provided at an entrance (not shown) in the office 200.

The management device 10 manages the network devices 50. To be more specific, the management device 10 sets up the interconnecting devices 40 so that a different VLAN (Virtual Local Area Network) is assigned to each or some of the network devices 50 based on the device identifier of the network device 50. Moreover, the management device 10 manages an entry to and leaving from the office 200. The management device 10 also manages a connection status and traffic of each network device 50 through the interconnecting devices 40, although this is not described in detail. For example, the network device 10 obtains from the interconnecting device 40 the communication amount and/or communication time for each communication port 42 in the interconnecting device 40. The management device 10 may control communications of the communication port 42 based on the obtained communication amount and/or communication time.

The management device 10 in this embodiment is exemplarily implemented as a desktop PC, including an IC card drive 17 externally or internally. A contact-type IC card 20 is used for the IC card drive 17, but the noncontact-type IC card is not excluded from the present invention. Further, the present invention is broadly applicable to information recordable media in addition to the IC card.

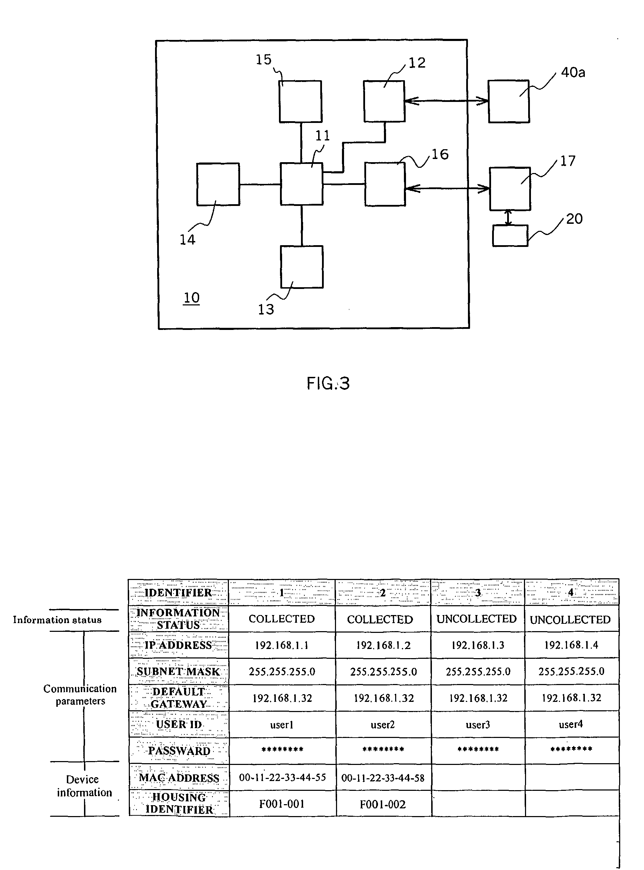

The management device 10 includes, as shown in FIG. 3, a controller 11, a communication port 12, a RAM 13, a ROM 14, a storage part 15, an interface 16, and an IC card drive 17. Here, FIG. 3 is a schematic block diagram of the management device 10. FIG. 3 does not show input/output devices (e.g., a keyboard, a mouse or other pointing devices, and an indication device, such as a display) provided with the management device 10. Using the input/output device, an operator of the management device 10 may control the IC card drive 17, enter various kinds of data in the storage part 15, and download necessary software into the RAM 13, ROM 14 or storage part 15.

The controller 11 broadly covers processors such as a CPU and an MPU regardless of its name, and controls each module in the management device 10. If necessary, the management device 10 may be connected to a host (not shown), and the controller 11 may communicate with the host.

The controller 11 executes a management-table creation program stored in the storage part 15, sets communication parameters for the network devices 50, and creates a management table 15a. The controller 11 stores part of the management table 15a in some IC cards 20 through the IC card drive 17.

The controller 11 sets up the interconnecting devices 40 via the communication port 12 so as to assign different VLANs based on device identifiers especially including MAC addresses of network devices 50 in the management table 15a. The present invention does not require the controller 11 to set up the interconnecting device 40 and assign a different VLAN to each network device 50 in the network 100. In other words, the same VLAN may include more than one network devices 50. Importantly, according to the instant embodiment, a different VLAN is assigned to specific network device(s) 50 (*e.g*., for executives and accountants) and other network devices.

The controller 11 in this embodiment assigns a VLAN 110, which is the same as that of the management device 10, to the interconnecting devices 40. Therefore, the management device 10 may control the interconnecting devices 40 in the VLAN 110, and performs the VLAN configuration for the interconnecting devices 40. The controller 11 assigns VLANs 120 and 122, different from the VLAN 110, to the network device 50c and the plural network devices 50a, 50b and 50d, respectively. As a result, the management device 10 cannot access files in the network devices 50. Conversely, the network devices 50 can neither access files in the network device 10 nor perform the VLAN configuration for the interconnecting devices 40. The network device 50c is independent of and cannot share files with the network devices 50a, 50b and 50d. These network devices 50a, 50b and 50d may share files in the same VLAN 122, but cannot access files in the network device 50c. The controller 11 assigns a VLAN 130, which allows communications with the VLANs 110, 120 and 122, to the entrance and common servers 30 and 70. Thus, the entrance and common servers 30 and 70 may communicate with the VLANs 110, 120 and 122, and the network device 50c may use the common server 70. An identifier of the VLAN may be included in the management table 15a, which will be described later.

The communication port 12 may be an LAN adapter connected to the interconnecting devices 40, and a USB port or IEEE 1394 port for providing connections to the Internet (as necessary, via an Internet Service Provider (ISP)) via a modem, or a terminal adapter (TA) through the public telephone network, ISDN, or various types of dedicated lines.

The RAM 13 temporarily stores data to be read from the ROM 14 and storage part 15, data to be written in the storage part 15, and the like. The ROM 14 stores various kinds of software and firmware required for operations of the controller 11, and other types of software.

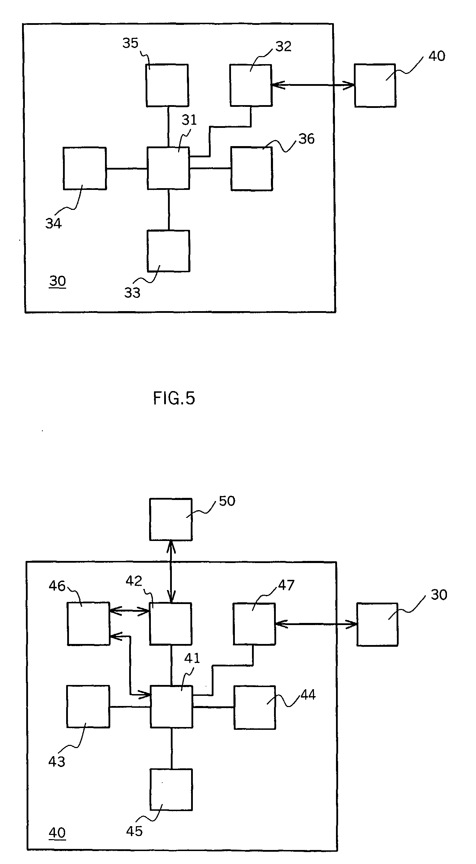

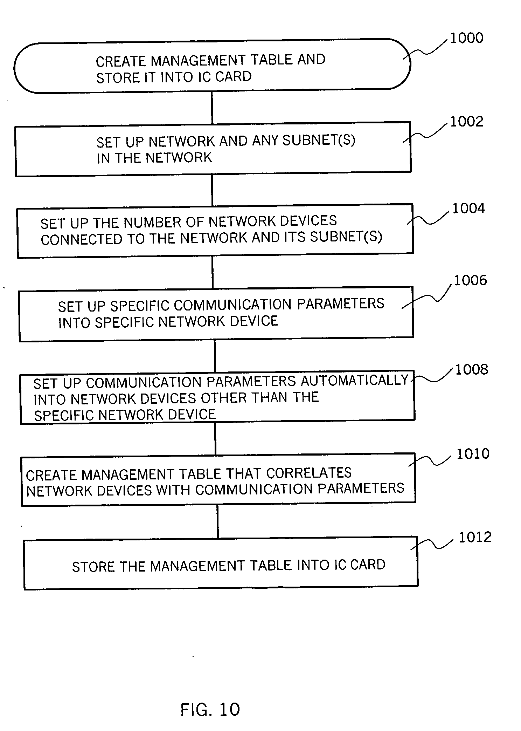

The storage part 15 stores a management-table creation program for creating the management table 15a shown in FIG. 10 as well as the management table 15a shown in FIG. 4. Here, FIG. 4 shows one example of the management table. The management-table creation program may be distributed as an independent commodity. Accordingly, the program may be stored in a CD-ROM or other recordable media to be sold, or distributed and updated online via a network, such as the Internet.

The management table 15a in the present embodiment indicates a relationship between the communication parameters corresponding to the network devices 50 and the device information unique to the network devices 50, where four network devices 50 are connected to the network 100 or its subnet(s) as a segment of the network 100. This management table 15a enables a unitary inventory management of the communication parameters and device information for the plural network devices 50.

Identifiers nos. 1-4 identify four different network devices 50. The information statuses are indicated with "collected" and "uncollected". The "collected" denotes that device information as will be described later has been stored, while "uncollected" denotes that the device information has not been stored yet. The network devices 50 labeled with identifiers nos. 1 and 2 have stored the device information in the present embodiment. The "collected" information is also stored in the IC card 20 that will be described later.

The communication parameters include, but are not limited to, an IP address, a subnet mask, a default gateway, and a user ID and password. The communication parameters may further include a DNS (Domain Name System) address and a router address.

The IP (Internet Protocol) address is a period separated four-block address, each block ranging 0-255 in decimal notation, and assigned to a computer connected to the TCP/IP network circumstance. The IP address is included in an IP header provided by the IP protocol in the network layer in the TCP/IP protocol.

The subnet mask is a bit pattern for separating the host address part of the IP address into a subnet address and a host address. When "255.255.255.0" is defined by the subnet mask, the first three numbers are represented in binary notation as "11111111". "1" denotes the same network in the subnet mask. Accordingly, it is to be understood that the four network apparatuses 50 are connected to the network "192.168.1.0" in the present embodiment.

The default gateway is an IP gateway through which a host transmits an IP datagram, except when the host for transmitting the IP datagram incorporates a routing table including a destination IP address and when the destination IP address has the same network address as the transmitting host.

The user ID and password pair is an identifier for identifying a user of the network 50 when the user attempts to login the network. It is preferable that the management device 10 acquires this information by offline from a user of each network device 50 before the management device 10 sets up the communication parameters for the network device 50.

The communication parameters may include cryptographic information (*e.g*., key information and encryption scheme), and an address of the management device 10 for transmitting a notice that the network device 50 is abnormal.

The device information unique to the network device 50 may include a MAC address, a housing identifier, a hardware version, and a firmware version.

The MAC (Media Access Control) address is an address for identifying an information device connected to a LAN and assigned to a NIC (Network Interface Card) in each computer. The MAC address is a physical address defined in a data link layer, which is the second layer, in an OSI (Open System Interconnection) reference model, and serves as a unique identifier. The housing identifier is an identifier for a housing of the network device 50. It is, for example, a lot number given by a manufacturer of the network device 50, and serves as a unique identifier.

The interface 16 is, for example, a USB port or a parallel port, and connects the management device 10 to an external device, *e.g.,* the IC card drive 17 in this embodiment. The interface includes any interface irrespective of a type of data transmission method, such as parallel and serial systems, and a type a connection medium, such as a radio and wire transmissions.

The IC card drive 17 writes data into and reads data from the IC card 20. The IC card drive 17 writes down one management table 15a, which has been output by the controller 11 through the interface 16, onto the IC card 20 in this embodiment. As described above, the information recordable medium applicable to the present invention is not limited to use of an IC card. Therefore, an appropriate drive may be selected depending upon a type of the information recordable medium. The IC card drive 17 may use any technology known in the art or be manufactured by those skilled in the art, and a detailed description thereof will be omitted.

The IC card 20 in this embodiment serves as an admittance card (authentication card) to the office 200, as well as a card for authorized use with and initial setup for the network devices 50. Therefore, the present invention requires a MAC address of the network device 50 which a user attempts to use, to be identical to a corresponding MAC address in the management table 15a stored in the IC card 20. Thereby, only the IC card 20 that stores a MAC address of a certain network device 50 may allow use of the network device 50. (As discussed later, the network device 50 does not even turn on unless the IC card drive 60 authenticates the corresponding MAC address in the inventive management system 1.) Although this embodiment uses a MAC address as an example of the network information, part or all of pieces of other network information including device information, such as a housing identifier, one of more communication parameters, such as an IP address, and a VLAN may be used.

The IC card 20 may express stored office information by its external appearance. For example, the IC card 20 may display a different letter, design, and color and combination thereof for each company department, directly (for example, by embossing it on the housing of the IC card 20) or indirectly (for example, by labeling it onto the IC card 20).

The IC card 20 generalizes a smart card, an intelligent card, a chip-in card, a microcircuit (or microcomputer) card, a storage part card, a super card, a multifunctional card, a combination card, etc. The IC card of the present invention is not limited to a cardshape medium, but may include any shape, such as a stamp size and smaller ultra-micro and coin shapes.

The entrance server 30 permits a logon to the network by the network device 50 having a predetermined MAC address. As shown in FIG. 5, the entrance server 30 includes a controller 31, a communication port 32, a RAM 33, a ROM 34, and a storage part 35. Here, FIG. 5 is a schematic block diagram of the entrance server 30.

The controller 31 refers to the management table 14a stored in the management device 10, and permits a logon to the network by the network device 50 having a predetermined MAC address.

The communication port 32 may be an LAN adapter connected to the interconnecting devices 40, and a USB port or IEEE 1394 port for providing connections to the Internet (as necessary, via an Internet Service Provider (ISP)) via a modem, or a terminal adapter (TA) through the public telephone network, ISDN, or various types of dedicated lines.

The RAM 33 temporarily stores data to be read from the ROM 34 and storage part 35, data to be written in the storage part 35, and the like. The ROM 34 stores various kinds of software and firmware required for operations of the controller 31, and other types of software.

The storage part 35 stores a program for authenticating MAC addresses, which will be described in the operation later. The authenticating program is a program to permit a login to the network 100 by the network device 50.

The interconnecting device 40 connects each network device 50 to the network 100, and includes one or more interconnecting ports 42 to be connected to the network device(s) 50. The interconnecting device 40 includes, for example, a hub, a switch, a router, any other concentrator, a repeater, a bridge, a gateway, device a PC, and a wireless interconnecting device (e.g., an access point as a interconnecting device for wireless LAN). The interconnecting device 40 may have a trigger function to execute a predetermined operation, such as a collection of predetermined information and a restriction of an access to the network. This trigger function may be coupled with data read from the IC card 20 by the IC card drives 17 and 60, and/or IC card reader 86. This trigger function of the interconnecting device 40 is preferable to achieve the automatic process.

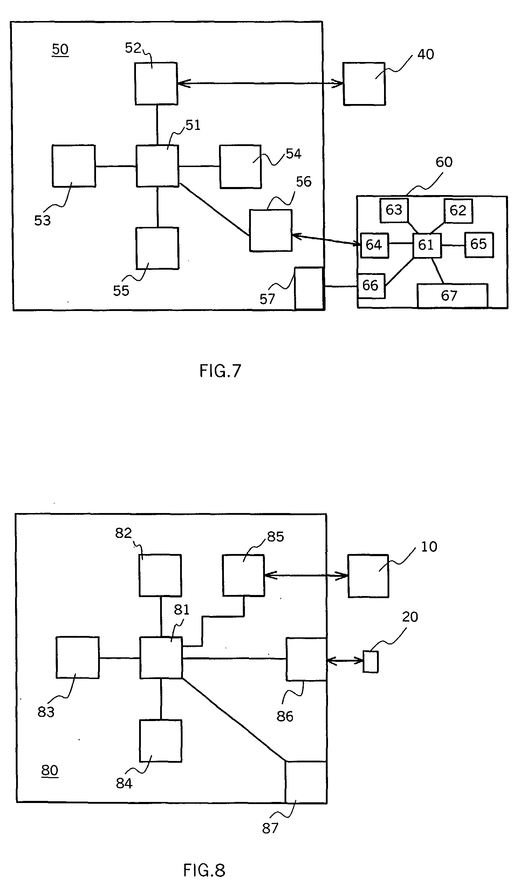

The interconnecting device 40 includes, as shown in FIG. 6, a controller 41, an interconnecting port 42, a RAM 43, a ROM 44, a storage part 45, a detector 46, and a communication port 47. Here, FIG. 6 is a schematic block diagram of the interconnecting device 40. In FIG. 6 likewise, the input/output device are not illustrated for simplicity purposes. Through the input/output device, an operator of the interconnecting device 40 may input various kinds of data in the storage part 45, and download necessary software into the RAM 43, and ROM 44 and storage part 45.

The controller 41 broadly covers processors including a CPU and a MPU, regardless of its name, controls each module in the interconnecting device 40. The controller 41 communicates with the detector 46 to provide the entrance server 30 with information for identifying the network device 50, and manages the interconnecting ports 42 so that each or some of the network devices 50 to be connected to the interconnecting device 40 may be assigned a different VLAN, based on a MAC address of the network device 50, in response to a request from the management device 10.

The interconnecting port 42 is a communication port to which each network device 50 is connected by a cable. More specifically, one of the interconnecting ports in the network device 40a is connected to the network device 40b. The network devices 50a-50d are connected to the interconnecting ports in the network device 40b.

The RAM 43 temporarily stores data to be read from the ROM 44 and storage part 45, data to be written in the storage part 45, and the like. The ROM 44 serves to store various kinds of software and firmware necessary for operations of the controller 41, and other types of software. The storage part 45 stores a program for managing the interconnecting ports 42.

The detector 46 detects power-on of the network device 50 by communicating with the interconnecting port 42, and notifies the controller 41 of the detection. Since the detector 46 compares the voltage of the interconnecting port 42 with a specific slice level for detection or uses any structure known in the art, a detailed description of the detector 46 will be omitted.

The communication port 47 may be an LAN adapter connected to the interconnecting devices 40, and a USB port or IEEE 1394 port for providing connections to the Internet (as necessary, via an Internet Service Provider (ISP)) via a modem, or a terminal adapter (TA) through the public telephone network, ISDN, or various types of dedicated lines. The interconnecting device 40 communicates with the management device 10 through the communication port 47.

The network device 50 is a device managed by the management device 10, and includes a network device, such as a hub, a switch, a router, any other concentrator, a repeater, a bridge, a gateway device, a PC, a server, a wireless interconnecting device (e.g., an access point as a interconnecting device for wireless LAN), and a game machine having a communication function.

The network device 50 includes, as shown in FIG. 7, a controller 51, a communication port 52, a RAM 53, a ROM 54, a storage part 55, an interface 56, a power controller 57, and an IC card drive 60. Here, FIG. 7 is a schematic block diagram of the network device 50. In FIG. 7 as well, the input/output devices provided with the network device 50 are omitted for simplicity purposes. Through the input/output device, an operator of the network device 50 may input various kinds of data in the storage part 55, and download necessary software into the RAM 53, and ROM 54 and storage part 55. The IC card drive 60 may be internal or external to the network device 50.

In this embodiment, the power to drive the network device 50 is supplied preferentially to the IC card drive 60 so that the power supply to the network device 50 is controlled by the IC card drive 60 and selectively supplied to the network device 50. For example, the network device 50 includes a power circuit that is structured to drive only the IC card drive 60, and another power circuit that is structured to drive only the network device 50 except the IC card drive 60: Each circuit is supplied power independently. Even in this case, the IC card drive 60 should control the power circuit for driving only the network device 50. Where only one power circuit drives the network device 50, it supplies power preferential to the IC card drive 60 and the IC card drive 60 controls the power supply so that the network device 50 can share the power supply. The instant embodiment adopts the former type, but may employ the latter type.

The controller 51 covers a broad range of processors such as a CPU or an MPU regardless of its name, controls each module in the network device 50. The controller 51 reads communication parameters stored in an IC card 20 through the IC card drive 60, and performs the initial setup based on this information. Moreover, The controller 61 stores the device information in the IC card 20 through the IC card drive 60.

The communication port 52 may be an LAN adapter for establishing a connection to the network, and a USB port or IEEE 1394 port for providing connection to the Internet (as necessary, via an Internet Service Provider (ISP)) via a modem, or a terminal adapter (TA) through the public telephone network, ISDN, or various types of dedicated lines.

The RAM 53 temporarily stores data to be read from the ROM 54 and storage part 55, data to be written in the storage part 55, and the like. The ROM 54 stores various kinds of software and firmware necessary for operations of the controller 51, and other types of software. The storage part 55 stores a communication parameter and a configuration program. The configuration program is to receive the communication parameters from the management device 10 and set up them.

The interface 56 is, for example, a USB or parallel port, and connects the management device 10 to an external device, e.g., the IC card drive 60 in this embodiment. The interface includes any interface irrespective of a type of data transmission method, such as parallel and serial systems, and a type a connection medium, such as a radio and wire transmissions.

The power controller 57 controls power supply for driving the network device 50 except the IC card drive 60. The power controller 57 is, for example, a switch and the like, and may supply and stop supplying power to the network device 50 based on a signal sent from the IC card drive 60. The power controller 57 is connected to a power-supply cable, through which the power is supplied from the power controller 57.

The IC card drive 60 reads information stored in the IC card 20, and writes information into the IC card 20. The IC card drive 60 in this embodiment includes a controller 61, a RAM 62, a ROM 63, an Interface 64, a storage part 65, a signal transmitter 66, a recorder/reproducer 67, and a sensor.

The IC card drive 60 includes an IC-card insertion opening (not shown), and the recorder/reproducer 67 may read the IC card 20 when the IC card 20 is inserted into the IC card drive 60 through the insertion opening. An eject button (not shown) is provided near the insertion opening to eject the inserted IC card, and may use any technology to achieves this function. For example, the eject button is structured to be spring-loaded, and it is released when pressed, whereby the spring force ejects the IC card from the insertion opening.

The controller 61 broadly covers processors such as a CPU and an MPU regardless of its name, and controls each module in the IC card drive 60. The controller 61, in conjunction with the present invention, compares for authentication purposes the MAC address stored in the storage part 65 with the MAC address in the management table 15a in the IC card 20. As described later, the controller 61 preferably notifies the controller 51 for the initial setup, as will be discussed later, that the IC card 20 stores the communication parameters but no MAC address. Thus, the IC card 20 that stores no MAC address is used to initially set up the network device 50, while the security to access the network device 50 is maintained against an unauthorized user who pretends the initial setup.

The RAM 62 temporarily stores data to be read from the ROM 63 and storage part 65, data to be written in the storage part 65, and the like. The ROM 63 stores various kinds of software and firmware required for operations of the controller 61, and other types of software. The interface 64 connects electrically with the interface 56 of the network device 50, transmits information read by the recorder/reproducer 67 to the controller 51, and records information from the controller 51. The storage part 65 stores the MAC address of the network device 50. Alternatively, the MAC address may be stored in the ROM 63.

The signal transmitter 66 is a module to be electrically connected to the power controller 57 and sends a signal from the controller 61 that manages the power controller 57. The recorder/reproducer 67 contacts the IC card 20, reads information from, and writes information onto the IC card 20. The sensor (not shown) checks whether the IC card 20 has been inserted into the insertion opening. For example, the sensor is an optical sensor including, for example, light-emitting and light-receiving elements. According to the thusstructured sensor, the IC card 20 when inserted, for example, interrupts a beam emitted from the light-emitting element and to be incident to the light-receiving element, making the sensor signal OFF, while the IC card 20 when ejected enables the beam from the light-emitting element enters the light-receiving element, making the sensor signal ON. Thus, the controller 61 recognizes the presence of the IC card 20 by checking the ON and OFF states in the signal output from the sensor.

The common server 70 is a server that is shared in the office 200, and may cover, for example, a file server, a print server, an application server, a proxy server, a mail server, etc. Those skilled in the art can conceive such a common server, and a description thereof will be omitted.

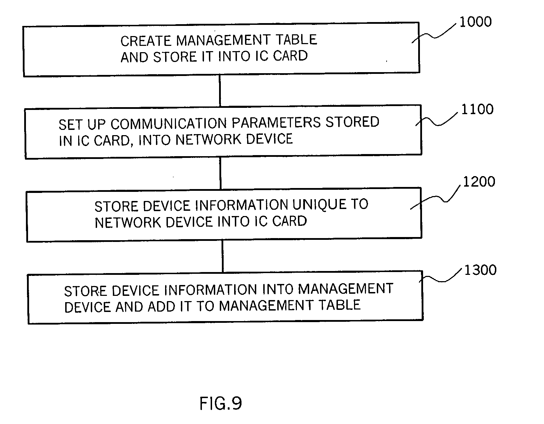

The admittance manager 80 manages users' admittance to and leaving from the office 200, and includes, as shown in FIG. 8, a controller 81, a RAM 82, a ROM 83, a storage part 84, a transmitter/receiver 85, an IC card reader 86, and a key 87. Here, FIG. 8 is a schematic block diagram of the admittance manager 80.

The controller 81 broadly covers processors such as a CPU and an MPU regardless of its name, and controls each module in the admittance manager 80. The controller 81 executes an admittance management program, which will be discussed in the operation in detail, and manages user's admittance to the office 200. More specifically, the controller 81 sends to the management device 10 a MAC address stored in the IC card 20 and read by the IC card reader 86. The controller 81 locks and unlocks the key 87 in accordance with the authentication result by the management device 10.

The RAM 82 temporarily stores data to be read from the ROM 83 and storage part 84, data to be written in the storage part 84, and the like. The ROM 83 stores various kinds of software and firmware required for operations of the controller 81, and other types of software. The transmitter/receiver 85 connects with the management device 10 electrically (or using a radio communication system), transmits, and receives signals between the management device 10 and the controller 81. The IC card reader 86 reads information stored in the IC card 20 and sends the information to the controller 81 through an interface (not shown). The IC card reader 86 may use any technology known in the art. The key 87 is a key at an entrance, such as a door (not shown), in the office 200, which electrically locks and unlocks the entrance as a result of communications with the controller 81. The key 87 may use, for example, technology known as an electronic key.

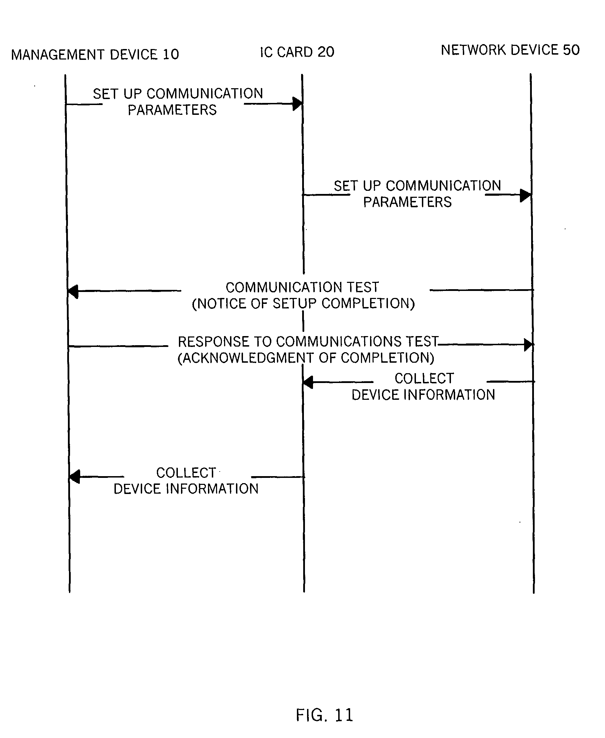

A description will now be given of an operation of the inventive management system 1. First, a description will be given of the configuration operation of the communication parameters with reference to FIGs. 9-11. Here, FIG. 9 is a flowchart for explaining the operation of the management system 1. FIG. 10 is a flowchart of a management-table creation program. FIG. 11 is a timing chart for explaining the operation of the management system 1.

Referring to FIG. 9, the management system 1 creates the management table 15a, and stores the management table 15a into the IC card 20 (step 1000). The step 1000 is illustrated as an arrow from the management device 10 to the IC card 20 in FIG. 11.

A detailed description will now be given of the step 1000 with reference to FIG. 10. The management device 10 needs to store the management table 15a in the storage part 15, but does not necessarily have to create the management table 15a by itself and may store the management table 15a created by another PC or the like. Therefore, although the management device 10 performs this step in this embodiment, another PC or the like may exercise the method illustrated in FIG. 10.

The controller 11 prompts an administrator of the network 100 to enter the network 100 and any subnet(s) in the network 100, and configures them in accordance with the entry (step 1002). The administrator may set up, for example, a subnet for each department.

The controller 11 then prompts the administrator to enter the number of network devices 50 to be connected to the network 100 and its subnet(s), and sets up the number upon entry (step 1004).

The controller 11 then sets a specific communication parameter for each specific network device 50 (step 1006). That is, as in the step 1008, which will be described below, the controller 11 automatically sets up communication parameters for the network devices 50, but leaves a freedom to select a preferred IP address for a particular network device 50. This, for example, allows a user who uses a specific network device 50 (*e.g*., a manager of the department) to select the lowest IP address.

The controller 11 then automatically sets up communication parameters for the network devices 50 other than the specific network device 50 (step 1008). In this event, the controller 11 may set up the IP addresses in consecutive numbers or at random. This step reduces the burden on the administrator during the configuration in comparison with the conventional manual configuration using serial communications.

The controller 11 then creates the management table 15a that correlates the network devices 50 with their communication parameters (step 1010). As a result, the management table 15a shown in FIG. 4 is prepared. This step, as described above, allows the administrator of the management device 10 to unitarily administer the network 100.

Lastly, the controller 11 extracts and stores part of the management table 15a in corresponding IC cards 20 through the IC card drive 17 (step 1012). Specifically, the controller 11 commands the IC card drive 20 via the interface 16 to extract one of communication parameters in the management table 15a from the storage part 15 and store it in the IC card. The controller 11 may extract the part of the management table 15a in the order from the smallest identifier or at random, or indicate a message that requests the administrator to select the part of the management table 15a.

The IC card 20 may have internal information for identifying the stored information. For instance, a department and its location may be recorded as property information of the management table 15a together with the management table 15a.

If the management device 10 has already been given a user ID/password pair used for a user of the network device 50 to log in the network 100, the controller 11 adds this pair to the management table 15a. Otherwise, the controller 11 will add this pair later.

Turning back to FIG. 9, the communication parameters in the IC card 20 are set on the network device 50 (step 1100). The step 1100 is indicated as an arrow from the IC card 20 to the network device 50 in FIG. 11.

The administrator of the management device 10 ejects the IC card 20 from the IC card drive 17, carries and inserts it into the IC card drive 60. The administrator of the management device 10 carries the IC card 20 to the network device 50 and keeps the network security effectively, since he/she would never carry the IC card 20 to a terminal for unauthorized accesses.

Of course, even though anyone other than the administrator of the management device 10 carries the card, the security can be enhanced in comparison with an initial set up by the conventional method, such as a DHCP. Firstly because the network device 50 should include internally or externally an IC card drive 60, excluding those network devices 50 which are not equipped with it.

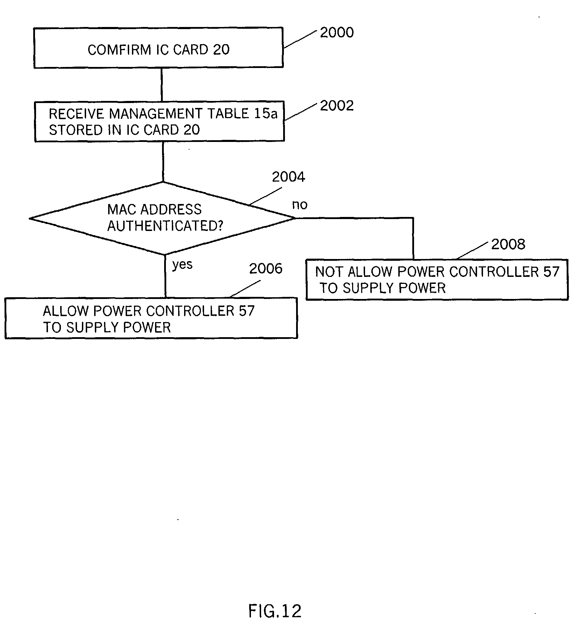

The administrator (or a person carrying the IC card 20) should note that he/she corresponds a user of the IC card 20 to the network device 50 which the user uses. The IC card 20 is inserted, after brought to the network device 50, into the IC card drive 60. Here, FIG. 12 is a flowchart showing a control operation by the IC card drive 60. When the IC card 20 is inserted into the insertion opening (not shown) in the IC card drive 60, the sensor's output signal becomes OFF. The controller 61 detects the off state, and confirms the presence of the IC card 20 (step 2000). The controller 61 obtains the management table 15a stored in the IC card 20 through the recorder/reproducer 67 (step 2002). The controller 61 determines whether the MAC address in the management table 15a corresponds to the MAC address of the network device 50 that has been stored in the storage part 65 (step 2004). In this case, the IC card 20 does not store the MAC address. Accordingly, the controller 61 is programmed to authenticate the IC card 20 to perform the initial setup operation when it finds no MAC address in the management table 15a stored in the IC card 20. Even when the controller 61 uses network information other than the MAC address, such as the IP address and the VLAN, in step 2004, such information is not stored in the storage part 65 at this stage. Accordingly, the controller 61 authenticates the IC card 20 to perform the initial setup operation when the management table 15a lacks part of the network information.

The controller 61 sends, when confirming the correspondence, a signal that allows the power controller 57 to supply power through the signal transmitter 66 (step 2006). Thereby, the power is available to the network device 50 in addition to the IC card drive 60, and the entire network device 50 becomes usable. As discussed above, when the IC card 20 stores no MAC address, the controller 61 preferably allows the network device 50 to record the communication parameter, which will be described later, and to store information into the IC card 20. Likewise, when the storage part 65 lacks part of the other network information, the controller 61 preferably allows the network device 50 to record the communication parameters and to store information into the IC card 20. Thus, this configuration operation maintains the security against unauthorized users who attempt to access the network device 50.

If the controller 61 does not confirm the correspondence except during the initial configuration time, the power is not supplied to the network device 50 except the IC card drive 60 (step 2008). The controller 61 may electrically control the eject button (not shown) to perform the above ejection step. Thereby, the administrator (or user) recognizes that the inserted IC card is a card that does not correspond to the network device 50 (or an unusable card).

The authentication of the MAC address after the insertion of the IC card 20 is executed in the usual use of the network device 50. Thus, users who use an unauthorized IC card and who has no IC card are prevented from using the network device 50, and the security may be enhanced in the network device 50.

In step 1100, in accordance with the initial configuration program stored in the storage part 55, the controller 51 reads and sets part of the communication parameter stored in the IC card 20 that has been inserted into the IC card drive 60, which part corresponds to the instant network device 50. More specifically, the controller 51 sets up in the storage part 55 the communication parameters that have been obtained through the IC card drive 60 and the interface 56. Since the controller 51 automatically sets up the communication parameter, a setup of the communication parameter is easier than the manual setup using the serial communications. Although this embodiment stores the communication parameters stored in the IC card 20, into the storage part 55, the controller 51 may stores the communication parameters that have been obtained through the interface 56, into the RAM 53. In this case, the network device 50 is given the communication parameters when the IC card 20 is inserted into the IC card drive 60, and a user who has no IC card 20 cannot use the network device 50.

Turning back to FIG. 9, after the communication parameters have been set up, the controller 51 stores in the IC card 20, device information unique to the network device 50 (step 1200). The step 1200 is indicated as an arrow from the network device 50 to the IC card 20 in FIG. 11.

To be more specific, the controller 51 commands the IC card drive 60 via the interface 56 to transmit the device information from the storage part 55 and store it in the IC card 20. If the user ID and password pair has not yet been included in the management table 15a, the controller 51 stores this data together with the device information in the IC card 50 this time. Similarly, the controller 51 uses the interface 56 to stores in the storage part 65 in the IC card drive 60 part or all of the network information necessary for authentication that makes the network 50 available. Alternatively, the controller 51 communicates with the IC card drive 60, and the controller 61 directly reads from the IC card 20 part or all of the network information necessary for authentication, and stores that in the storage part 65. Data in the IC card 20 may be stored in the storage part before the communication parameters are set up in the network device 50.

The user then carries the IC card 20 to the management device 10, and inserts it into the IC card drive 17. As described above, the user of the network device 50 does not have to carry the IC card 20 to the management device 10 by himself/herself, but may send by mail or ask someone to do so. The controller 11 then commands the IC card drive 17 via the interface 16 to transmit the device information from the IC card 20, and adds the received device information to the management table 15a in the storage part 15 (step 1300). The step 1300 is indicated as an arrow from the IC card 20 to the management device 10 in FIG. 11. The controller 11 records "collected" in the management table 15a so as to indicate that that device information has been collected and stored, and in the IC card 20 as well. The controller 11 may set up the interconnecting device 40 so that a different VLAN is assigned to each or some of the network devices 50, based on the MAC address stored in the management table 15a. The administrator previously performs this VLAN configuration upon request from the user of the network device 50, or the administrator may be prompted to set up the VLAN when the MAC address is stored.

Next follows a description of the management operation of the network 100 by the management system 1. The above steps assign communication parameters to the network device(s) 50. Alternatively, the IC card 20 is inserted into the IC card drive 60 and the network device 50 is being assigned communication parameters. The controller 31 in the entrance server 30 receives a notice from the interconnecting device 40 through the communication port 32 that the network device 50 connected to the interconnecting device 40 turns on. In response to this notice, the controller 31 receives from the interconnecting device 40 the MAC address of the network device 50 connected to the interconnecting device 40. The controller 31 then requests the management device 10 to transmit the management table 15a or to confirm whether the received MAC address is stored in the management table 15a.

The controller 31 stores, when receiving the management table 15a, the management table 15a in the storage part 35. The controller 31 refers to the management table 15a in the storage part 35, and determines whether the received MAC address has been stored. Where the controller 31 requests the confirmation, the controller 31 receives the authentication result from the management device 10.

When the received MAC address is stored in the management table 15a, the controller 31 allows the interconnecting device 40 to communicate using its interconnecting port 42. Thereby, the network device 50 communicates with the common server 70 and other network devices 50 in the same VLAN. As described above, the management device 10 manages structure, performance, security, and billing by managing the connection and traffic statuses through the interconnecting device 40.

When the received MAC address is not stored in the management table 15a, it prohibits the communication through the interconnecting port 42 in the interconnecting device 40, to which the network device 50 that has the received MAC address is connected. The controller 31 may notify the administrator of the management device 10 of the unauthorized access to the network 100 through the network device 50.

The entrance server 30 using such a step permits the network device 50 having the predetermined MAC address to access the network 100, prohibiting the unauthorized network devices from accessing the network 100.

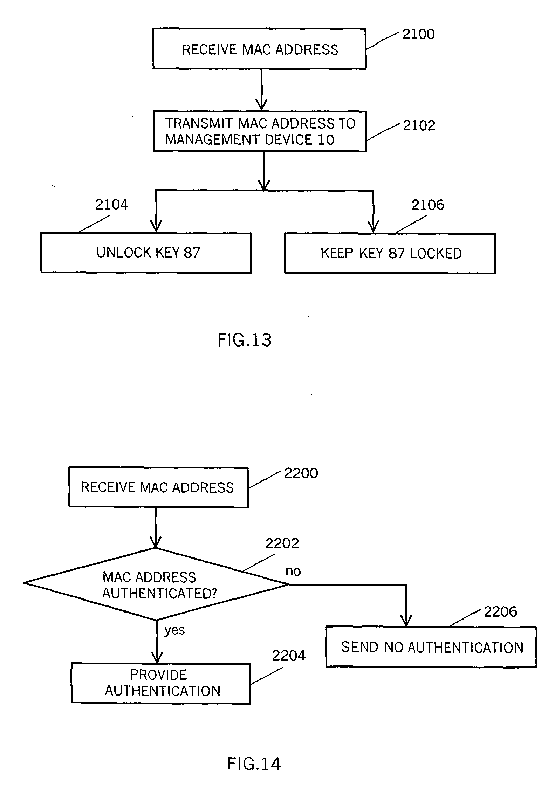

A description will now be given of the management operation of the office 200 in the management system 1, with reference to FIGs. 13 and 14. Here, FIG. 13 is a flowchart of a control method of the admittance manager 80. FIG. 14 is a flowchart of the control method of the management device 10.

A user who enters the office 200 receives the IC card 20 from the administrator. The above initial configuration stores in the IC card 20, the MAC address and communication parameters corresponding to the network device 50 which the user attempts to use. The user who enters the office 200 uses the IC card 20 as a unique key to lock and unlock the key 87 at the entrance of the office 200 in this embodiment.

When the user enters the office 200, he/she inserts the IC card 20 into the IC card reader 86 in the admittance manager 80. Then, as shown in FIG. 13, the controller 81 in the admittance manager 80 receives the MAC address stored in the IC card 20 (step 2100). The controller 81 then sends the received MAC address to the management device 10 through the transmitter/receiver 85 (step 2102), and awaits a response from the controller 10.

Referring to FIG. 14, the communication port 12 receives the MAC address sent in the step 2102, and transfers that to the controller 11 in the management device 10 (step 2200). The controller 11 checks if the MAC address exists in the management table 15a (step 2202).

When the controller 11 does not provide an authentication in the step 2202 (for example, because the user inserts the IC card 20 into the IC card reader 86 of a different room or uses an IC card for different purposes, because a person seeking an unauthorized access uses a fake IC card, or the like), the controller 11 informs the admittance manager 80 through the communication port 12 that it cannot authenticate the information (step 2206).

When it may be authenticated in step 2202, the controller 11 informs the admittance manager 80 that the MAC address has been authenticated (step 2204).

Turning back to FIG. 13, in response to the predetermined notice from the management device 10, the controller 81 executes a predetermined process based on the received information through the transmitter/receiver 85. More specifically, when the controller 81 receives the notice that the MAC address is not authenticated, the controller 81, for instance, indicates a message "IC card not authenticated" on the display (not shown), and does not unlock the key 87 (step 2106). The user when seeing such a message would repeat the similar procedure using the proper IC card. The user, who sees the message though he has used the proper IC card, would call or contact the administrator for help. An unauthorized person will give up entering the room since the key 87 is kept unlocked.

The controller 81 unlocks the key 87 when receiving a notice that the MAC address has been authenticated (step 2104). After the step 2104, the controller 81 may indicate a message "proceed" on the display (not shown).

The user who has entered the office 200 may work using the network device 50. As described above, the network device 50 does not turn on for the user having the IC card 20 that stores the MAC address of the network device 50, *i.e*., the regular user of the network device 50, preventing its unauthorized use. On the other hand, the network circumstance creates the high security as described above, which prevents an unauthorized person from modifying and obtaining files.

As discussed above, according to the management system 1 of the present invention, the management device 10 performs a unitary management of the network management for each network device 50 and admittance to the office 200. In addition, the management system 1 may assign different VLANs for respective network devices 50 based on their MAC addresses, maintaining the high level of security for the network 100. The IC card 20 performs the initial configuration for the network devices 50, improving the security in comparison with the conventional method. The network device 50 is not usable without the IC card 20 storing its MAC address. Thereby, the network device 50 is protected from unauthorized users.

Further, the present invention is not limited to the preferred embodiment, and various variations and modifications may be made without departing from the present invention. The management system of the present invention is applicable, for example, to an apartment house, school, etc. Although the above embodiment manages only one room, the management device may manage admittances to plural rooms and plural network devices.

The management method and system of the present invention control the power supply to a network device using the IC card storing the MAC address of the network device, preventing a person who has no IC card from using the network. In addition, the management device for managing the network devices performs a unitary management for the network and access to each network (for example, in an office and a school). Therefore, this management system enhances the added and asset value of the office, apartment house, and school.

## Claims

1. A management system comprising:
a managed device connected to a network and assigned network information that enables communications of said managed device on the network;
a management device, connected to the network, which manages said managed device based on said network information and stores the network information in an information recordable medium; and
a drive unit which reads the information recordable medium,
wherein said managed device is made available when said drive unit reads the network information of said managed device from the information recordable medium.

2. A management system according to claim 1, wherein said information recordable medium is an IC card.

3. A management system according to claim 1, wherein said drive unit includes:
a storage part for storing the network information of said managed device; and
a controller which stores in said storage part the network information read from the information recordable medium when determining that the network information has not yet been stored in said storage part.

4. A management system according to claim 1, wherein said drive unit includes:
a storage part for storing the network information of said managed device; and
a controller which compares data read from the information recordable medium, with the network information stored in said storage part, and makes available said managed device when determining that the data read from the information recordable medium corresponds to the network information stored in said storage part.

5. A management system according to claim 1, wherein said drive unit communicates with said management device, and
wherein said management device includes:
a storage part for storing the network information of said managed device; and
a controller which compares data sent from said drive unit with the network information stored in said storage part, and makes available said managed device when determining that the data corresponds to the network information stored in said storage part.

6. A management system according to claim 1, further comprising an interconnecting device which connects the network to said managed and management devices,
wherein said management device sets up the interconnecting device so as to assign a VLAN to said managed device based on the network information of said managed device.

7. A management system according to claim 6, wherein the network information includes a VLAN.

8. A management system according to claim 1, further comprising an interconnecting device which connects the network to said managed and management devices, and executes a predetermined operation when said drive unit reads predetermined data from the information recordable medium.

9. A management system according to claim 1, further comprising an admittance manager, connected to said management device, which controls admittance into an area in which the network is built, by reading the information recordable medium and communicating with the management device

10. A management system according to claim 9, wherein the network includes a plurality of VLANs, and one of the VLANs is assigned to the area.

11. A management system according to claim 1, wherein the network information includes a communication parameter necessary for communications by the managed device in the network, and device information that defines the managed device.

12. A management system according to claim 1, wherein the network information is a MAC address of the managed device.

13. A management system comprising:
a managed device connected to a network and assigned network information that enables communications of said managed device on the network; and
a management device, connected to the network, which manages said managed device based on the network information,
wherein said management device includes a first drive unit for storing the network information into an information recordable medium,
wherein said managed device includes a second drive unit that reads the network information from the information recordable medium, and
wherein said managed device stores the network information read by said second drive unit, and is made available when the network information read by said second drive unit corresponds to the network information stored.

14. A management method of an access to a network by a managed device that is connected to the network and assigned network information that enables communications of said managed device in the network, said method comprising the steps of:
reading an information recordable medium;
storing the network information in a storage part;
determining whether data read from the information recordable medium corresponds to the network information stored in the storage part; and
making available the managed device in the network, when said determining step determines that the data read from the information recordable medium corresponds to the network information stored in the storage part.

15. A management method according to claim 14, further comprising a step of setting up the network information in the managed device read from the information recordable medium.

16. A network device connected to a network and assigned network information that enables communications of said network device in the network, said network device including a drive unit, said drive unit comprising:
a reader part for reading an information recordable medium;
a storage part that stores the network information; and
a controller that makes said network device available when determining that data read by said reader part from the information recordable medium corresponds to the network information stored in said storage part.

17. A network device according to claim 16, wherein said controller sets up the network information read by said reader part from the information recordable medium, when determining that the network information has not yet been stored in said storage part.

18. A network device according to claim 17, wherein said drive unit controls power to be supplied to said network device, and said controller makes the network device available by allowing the power supply to said network device.

19. A management device, connected to a network, which manages a managed device connected to the network and assigned network information that enables communications of said management device on the network, said management device comprising:
a storage part which stores the network information;
a drive unit which stores the network information into an information recordable medium to be used to set up in the managed device; and
a controller which controls an availability of the network device.

20. A program for computer-executing a method of making available a managed device that is connected to a network and assigned network information that enables communications of said managed device on the network, the network information being stored in an information recordable medium and a storage part, said method comprising the steps of:
determining whether data read from the information recordable medium corresponds to the network information that has been stored in a storage part; and
making available the managed device in the network, when said determining step determines that the data read from the information recordable medium corresponds to the network information stored in the storage part.

21. A program according to claim 20, wherein said method further comprising the steps of:
determining whether the network information is stored in the storage part; and
allowing the storage part to store the network information when said determining step determines that the network information has not yet been stored in the storage part.
